# EUROPÄISCHE PATENTSCHRIFT

(11) **EP 2 330 725 B1**
(45) Veröffentlichungstag und Bekanntmachung des Hinweises auf die Patenterteilung: **26.02.2014**
(21) Anmeldenummer: 09014934.5
(22) Anmeldetag: 02.12.2009
(51) Int. Cl.: H02K 51/00, F04D 13/06, F04D 29/52

(54) **Strömungserzeugungseinheit**
Flow generation unit
Unité de production d'écoulement

(43) Veröffentlichungstag der Anmeldung: 08.06.2011
(73) Patentinhaber: Grundfos Management A/S, 8850 Bjerringbro (DK)
(72) Erfinder: Nybo, Peter Jungklas, 8940 Randers SV (DK)
(74) Vertreter: Vollmann, Heiko

(56) Entgegenhaltungen:
- EP-A2- 1 936 204
- CN-Y- 201 286 043
- DE-U1- 7 826 229
- GB-A- 2 457 226

## Beschreibung

Die Erfindung betrifft eine Strömungserzeugungseinheit in Form einer Rezirkulationspumpe, eines Mixers oder eines Strömungsbeschleunigers mit einem Flügelrad, die zum Tauchbetrieb in einer Flüssigkeit ausgebildet ist.

Beim Tauchbetrieb von Strömungserzeugungseinheiten in Flüssigkeiten, wie beispielsweise bei Rezirkulationspumpen in Klärwerken, bilden Wartungs- und Reparaturkosten einen großen Anteil der gesamten Betriebskosten. Insbesondere die Wartung und ein gegebenenfalls erforderlicher Austausch beweglicher Teile ist bei tauchbetriebenen Strömungserzeugungseinheiten aufwendig und kostenträchtig. Nachteilhaft können Verschleiß sowie Ablagerungen an bzw. zwischen beweglichen Teilen die Funktionsfähigkeit von Strömungserzeugungseinheiten beeinträchtigen und daher eine häufige Wartung sowie Reparaturen erfordern. Ferner erfordern Strömungserzeugungseinheiten zuverlässige Dichtungen, um Flüssigkeitseinträge an elektrischen oder mechanischen Komponenten sowie Ablagerungen zu vermeiden. Insbesondere die hierzu erforderlichen dynamischen Dichtungen sind regelmäßig zu wechseln, was den Wartungsaufwand zusätzlich intensiviert.

Eine solche Strömungserzeugungseinheit ist beispielsweise aus EP 1 936 204 A2 bekannt. Sie weist einen Tauchmotor auf, welcher ein Laufrad antreibt. Dabei ist der Tauchmotor ausgangsseitig durch eine umgebende Manschette nach außen abgedichtet.

Vor diesem Hintergrund ist es Aufgabe der Erfindung, eine Strömungserzeugungseinheit in Form einer Rezirkulationspumpe, eines Mixers oder eines Strömungsbeschleunigers zu schaffen, die einen deutlich verringerten Wartungsaufwand aufweist.

Diese Aufgabe wird mit einer Strömungserzeugungseinheit mit den in Anspruch 1 angegebenen Merkmalen gelöst. Bevorzugte Weiterbildungen der Erfindung ergeben sich aus den Unteransprüchen, der nachfolgenden Beschreibung und den Zeichnungen.

Die erfindungsgemäße Strömungserzeugungseinheit ist zum Tauchbetrieb in einer Flüssigkeit ausgebildet und ist eine Rezirkulationspumpe, ein Mixer oder ein Strömungsbeschleuniger. Die Strömungserzeugungseinheit weist ein Flügelrad sowie einen Elektromotor auf und umfasst ein Magnetgetriebe, welches eine Eingangsseite und eine Ausgangsseite mit jeweils einer Anordnung magnetischer Pole aufweist. Unter der Eingangsseite des Magnetgetriebes im Sinne dieser Anmeldung ist dabei die Antriebsseite des Magnetgetriebes zu verstehen. Die Ausgangsseite ist in diesem Zusammenhang gleichbedeutend mit der Abtriebsseite des Magnetgetriebes.

Die Anordnungen magnetischer Pole an Eingangs- und Ausgangsseite sind miteinander durch Magnetfelder bewegungsgekoppelt, wobei zwischen Ein- und Ausgangsseite des Magnetgetriebes ein Übersetzungsverhältnis besteht. Die Ausgangsseite des Magnetgetriebes der erfindungsgemäßen Strömungserzeugungseinheit ist zum Antrieb des Flügelrades mit diesem bewegungsgekoppelt. Der Elektromotor ist zum Antrieb des Magnetgetriebes mit dessen Eingangsseite bewegungsgekoppelt. Das Magnetgetriebe leistet dabei zum einen eine Drehzahl-/Drehmomentwandlung, durch welche die Drehzahl des Elektromotors auf die erforderliche Drehzahl des Flügelrades herabgesetzt wird. Zum anderen sind bei dem Magnetgetriebe der erfindungsgemäßen Strömungserzeugungseinheit Ein- und Ausgangsseite magnetisch und damit berührungslos bewegungsgekoppelt. Daher unterliegen die gegeneinander beweglichen Teile des Magnetgetriebes keinerlei Verschleiß. Schmierung, Wartung und insbesondere ein verschleißbedingter Austausch des Magnetgetriebes entfallen somit vorteilhafterweise. Das Magnetgetriebe der erfindungsgemäßen Strömungserzeugungseinheit ermöglicht daher einen in dieser Hinsicht wartungsfreien Betrieb der Strömungserzeugungseinheit. Ferner ist es bei dem berührungsfrei koppelnden Magnetgetriebe nicht erforderlich, an Ein- und Ausgangsseite die jeweiligen Wellen jeweils gegen Flüssigkeitseinträge abzudichten. Vorteilhaft erfordert die erfindungsgemäße Strömungserzeugungseinheit somit weniger oder keine dynamischen Dichtungen.

Erfindungsgemäß ist eine Kapselung vorgesehen, welche den Elektromotor und die Anordnung magnetischer Pole der Eingangsseite des Magnetgetriebes gemeinsam kapselt. Das Flügelrad ist dabei außerhalb dieser Kapselung angeordnet und vorzugsweise freistehend ausgebildet, sodass es vorzugsweise frei in der zu fördernden Flüssigkeit dreht. Gerade Flüssigkeitseinträge bei Elektromotoren sind für den Betrieb von Strömungserzeugungseinheiten besonders kritisch. Ein Flüssigkeitseintrag in den Bereich des Elektromotors ist gemäß der Erfindung dauerhaft und zugleich wartungsfrei ausgeschlossen, da zum Antrieb des Flügelrads keine Welle aus der flüssigkeitsdichten Kapselung nach außen geführt werden muss.

Die Kapselung trennt den Elektromotor und die Anordnung magnetischer Pole der Eingangsseite des Magnetgetriebes von der Ausgangsseite des Magnetgetriebes. Zusätzliche dynamische Dichtungen, wie beispielsweise Wellendichtungen an einer Antriebswelle des Flügelrades oder einer Eingangswelle des Getriebes, sind erfindungsgemäß nicht erforderlich. Damit ist ein zuverlässiger und wartungsarmer Betrieb der Strömungserzeugungseinheit möglich.

Bevorzugt bildet bei der erfindungsgemäßen Strömungserzeugungseinheit zumindest ein zwischen den Anordnungen magnetischer Pole der Ein- und der Ausgangsseite des Magnetgetriebes angeordneter Teil der Kapselung eine nichtmagnetische Trennwand. Die Trennwand liegt dabei bevorzugt in der Art eines Spaltrohrs vor. Beispielsweise kann die eingangsseitige Anordnung magnetischer Pole vom Spaltrohr umfänglich umgeben sein, wobei die magnetischen Pole der Ausgangsseite des Magnetgetriebes außerhalb des Spaltrohres, etwa umfänglich um das Spaltrohr herum, angeordnet sind. Die nichtmagnetische Ausbildung der ggf. vorhandenen Trennwand beeinflusst die auf magnetischem Kraftschluss beruhende Wirkungsweise des Magnetgetriebes im Wesentlichen nicht.

Zweckmäßigerweise ist bei der Strömungserzeugungseinheit das Übersetzungsverhältnis des Magnetgetriebes größer als 1, d. h. das Magnetgetriebe nimmt eine Drehzahl- und Drehmomentwandlung bei eingangsseitig hoher Drehzahl vor hin zu ausgangsseitig niedrigen Drehzahlen. Bevorzugt ist die Eingangsseite des Magnetgetriebes dabei mit einem Schnellläufer bewegungsgekoppelt.

Bevorzugt sind bei der erfindungsgemäßen Strömungserzeugungseinheit die Anordnungen magnetischer Pole von Ein- und Ausgangsseite des Magnetgetriebes jeweils als Magnetring mit mehrpoliger Magnetisierung ausgebildet. Die Magnetringe der Ein- und Ausgangsseite weisen dabei jeweils in umfänglicher Richtung eine Wechselfolge von magnetischen Nord- und Südpolen auf. Die Magnetringe sind jeweils derart drehbar angeordnet, dass die Magnetringe miteinander über ihre Magnetfelder in Wechselwirkung treten. Die Kopplung der Magnetringe kann dabei im Wesentlichen ähnlich der Kopplung von Getriebezahnrädern realisiert sein. Beispielsweise sind die Magnetringe kreisringförmig mit gleichabständig über den Umfang verteilten Magnetpolen ausgebildet. Die Magnetringe sind dabei derart drehbar angeordnet, dass umfängliche Bereiche beider Magnetringe einander ausreichend nahe sind, dass in diesen Bereichen jeweils ein Pol des Magnetrings der Eingangsseite mit einem ungleichnamigen Pol des Magnetrings der Ausgangsseite magnetisch kraftschlüssig, analog zu einer Verzahnung, in Eingriff ist. Auf diese Weise ist eine Drehbewegung des Magnetrings der Eingangsseite mit einer Drehbewegung des Magnetrings der Ausgangsseite drehbewegungsgekoppelt.

Vorzugsweise sind bei der Strömungserzeugungseinheit der Magnetring der Eingangsseite und der Magnetring der Ausgangsseite des Magnetgetriebes um zueinander parallel verlaufende Drehachsen drehbar angeordnet. Zweckmäßigerweise sind das Flügelrad und ein Antrieb der Strömungserzeugungseinheit dabei an einander in Richtung der Drehachsen abgewandten Seiten des Magnetgetriebes angeordnet.

In einer bevorzugten Weiterbildung der erfindungsgemäßen Strömungserzeugungseinheit sind der Magnetring der Eingangsseite und der Magnetring der Ausgangsseite des Magnetgetriebes um zueinander versetzte Drehachsen drehbar angeordnet. Bevorzugt sind der Magnetring der Eingangsseite des Magnetgetriebes und der Magnetring der Ausgangsseite des Magnetgetriebes in einer gemeinsamen Ebene in der Art eines Stirnradgetriebes angeordnet. Zum Beispiel sind die Drehachsen um zumindest die Summe der beiden äußeren Radien der Magnetringe zueinander versetzt. Alternativ kann auch einer der Magnetringe vom jeweils anderen Magnetring umfänglich umgeben sein.

Vorzugsweise weist der Magnetring der Eingangsseite des Magnetgetriebes eine geringere Anzahl von Polen als der Magnetring der Ausgangsseite auf. In diesem Falle ist ein Übersetzungsverhältnis des Magnetgetriebes größer als 1 gewährleistet, sofern die magnetischen Pole der Eingangsseite und die magnetischen Pole der Ausgangsseite entlang einander naher umfänglicher Bereiche der Magnetringe stets paarweise miteinander kraftschlüssig koppeln. In diesem Fall bestimmt sich das Übersetzungsverhältnis analog zu Zahnradgetrieben als Verhältnis der Anzahl der Pole der Ausgangsseite und der Anzahl der Pole der Eingangsseite des Magnetgetriebes.

Bevorzugt weist bei der erfindungsgemäßen Strömungserzeugungseinheit der Magnetring der Eingangsseite des Magnetgetriebes einen geringeren Radius als der Magnetring der Ausgangsseite auf. Beispielsweise weisen die Magnetringe der Eingangsseite und der Ausgangsseite gleiche umfängliche Erstreckungen der Pole auf und sind - ähnlich wie Zahnräder - mit identischen Kreisgeschwindigkeiten drehbewegungsgekoppelt und bilden dabei eine Übersetzungsverhältnis größer als eins aus. In diesem Fall weist der Magnetring der Eingangsseite zugleich eine geringere Anzahl magnetischer Pole auf.

Besonders bevorzugt ist der Magnetring der Eingangsseite des Magnetgetriebes umfänglich vom Magnetring der Ausgangsseite umgeben. Beispielsweise sind der Magnetring der Eingangsseite und der Magnetring der Ausgangsseite in einer gemeinsamen Ebene angeordnet. Auf diese Weise lässt sich das Magnetgetriebe und somit auch die Strömungserzeugungseinheit raumsparend realisieren.

Ferner bevorzugt können die Anordnungen magnetischer Pole von Ein-und Ausgangsseite des Magnetgetriebes miteinander auch über zusätzliche Zwischenstufen des Magnetgetriebes durch Magnetfelder bewegungsgekoppelt sein, beispielsweise über zwischen Eingangs- und Ausgangsseite zwischenliegende, drehbare Magnetringe.

In einer bevorzugten Weiterbildung der erfindungsgemäßen Strömungserzeugungseinheit weist das Magnetgetriebe zwischen den Anordnungen magnetischer Pole der Ein- und der Ausgangsseite des Magnetgetriebes eine Anordnung stationärer Joche auf, die zur Bildung des Übersetzungsverhältnisses ausgebildet ist.

Beispielsweise sind dabei die Anordnungen magnetischer Pole der Ein-und der Ausgangsseite des Magnetgetriebes jeweils als Magnetring mit in umfänglicher Richtung mehrpoliger Magnetisierung ausgebildet. Bevorzugt sind die Magnetringe der Ein- und der Ausgangsseite des Magnetgetriebes als Kreisringe konzentrisch zueinander angeordnet. Besonders bevorzugt sind die Joche ebenfalls entlang eines konzentrischen Kreises zwischen der Ein- und der Ausgangsseite des Magnetgetriebes angeordnet und gleichabständig über den Umfang verteilt. Zweckmä-βigerweise weist die Zahl der Joche von der Zahl der Nordpole der Ein-oder Ausgangsseite des Magnetgetriebes, insbesondere geringfügig, ab. Die Abweichung der Jochzahl von der Anzahl der Nordpole der Ein- bzw. Ausgangsseite des Magnetgetriebes hat dann ein von 1 abweichendes Übersetzungsverhältnis zur Folge.

Dies sei nachfolgend beispielhaft an einer Anordnung erläutert, bei der die Anzahl der Joche geringfügig von der Anzahl der Nordpole eines äußeren, zur Ausgangsseite des Magnetgetriebes gehörenden Magnetrings abweicht. Hierzu wird zunächst lediglich der ausgangsseitige Magnetring mit einer innenliegenden, kreisringförmigen Anordnung der Joche betrachtet. Entspräche die Anzahl der Joche der Anzahl der Nordpole, so läge hinsichtlich des äußeren Magnetrings allein an jedem Joch eine gleichartige Anordnung magnetischer Pole vor. Ist jedoch nun die Anzahl der Joche gegenüber der Anzahl der Nordpole des äu-βeren, ausgangsseitigen Magnetrings z. B. um 1 verringert, so ist die Anordnung magnetischer Pole relativ zum Joch nicht mehr bei allen Jochen gleich, sondern unterscheidet sich geringfügig von Joch zu Joch. Dies bedingt innerhalb des Kreisrings, auf welchem die Joche angeordnet sind, ein resultierendes effektives magnetisches Feld, welches derart in umfänglicher Richtung moduliert ist, dass es einen Nordpol und einen Südpol aufweist. Innerhalb der Joche liegt dann ein effektives moduliertes Feld ähnlich dem Feld eines zweipoligen Magnetrings vor.

Weicht die Anzahl der Joche von der Anzahl der Nordpole des ausgangsseitigen Magnetrings allgemein um die Zahl n ab, so resultiert innerhalb der Anordnung stationärer Joche ein effektives magnetisches Feld, welches in umfänglicher Richtung *n*-mal moduliert ist, mithin *n* Nordpole aufweist. Einer Drehung dieses effektiven magnetischen Feldes um 360°/*n* um die Drehachse des ausgangsseitigen Magnetrings entspricht eine Drehung des äußeren Magnetrings relativ zu einem stationären Joch um die umfängliche Erstreckung eines seiner Polpaare. Entsprechend besteht zwischen dem inneren effektiven Feld und der Drehung des äußeren Magnetrings bezüglich der Drehzahl ein Übersetzungsverhältnis.

Dieses innerhalb der Anordnung stationärer Joche gebildete effektive magnetische Feld ist in nun mit einem inneren, eingangsseitigen Magnetring des Magnetgetriebes gekoppelt. Der innere Magnetring kann nun mit dem innerhalb der Anordnung der Joche befindlichen effektiven magnetischen Feld des äußeren Magnetrings drehbewegungskoppeln und so den äußeren ausgangsseitigen Magnetring in Drehung versetzen. Zweckmäßigerweise weist dazu der eingangsseitige Magnetring dieselbe Anzahl von Nordpolen *n* auf wie das effektive magnetische Feld innerhalb der Joche. Vorteilhafterweise ist dann der eingangsseitige Magnetring mit dem ausgangsseitigen Magnetring über den gesamten Umfang der Magnetringe magnetisch kraftschlüssig bewegungsgekoppelt, sodass eine effiziente Drehmomentwandlung erfolgen kann.

Es versteht sich, dass bei der zuvor beschriebenen Weiterbildung der Erfindung die Anzahl der Joche von der Anzahl der Nordpole der Ausgangsseite auch nach oben hin abweichen kann. Ferner kann die Anzahl der Joche auch von der Anzahl der Nordpole der Eingangsseite, insbesondere geringfügig, abweichen. Besonders bevorzugt weicht bei der erfindungsgemäßen Strömungserzeugungseinheit, etwa wie im vorangehenden Beispiel beschrieben, die Anzahl der Joche von der Anzahl der Nordpole der Ausgangsseite zumindest um die Anzahl der Nordpole der Eingangsseite ab.

Ferner bevorzugt kann der eingangsseitige und/oder innere Magnetring auch exzentrisch zum äußeren Magnetring angeordnet sein und mit dem effektiven magnetischen Feld innerhalb der Anordnung stationärer Joche in der Art eines Zahnradgetriebes koppeln. Dabei ist es ausreichend, wenn lediglich in denjenigen umfänglichen Bereichen, in denen eine starke magnetisch kraftschlüssige Bewegungskopplung des ein- und des ausgangsseitigen Magnetrings erfolgt, Joche vorgesehen sind. Es versteht sich, dass mehr als zwei drehbare Magnetringe konzentrisch zueinander mit zwischenliegenden Anordnungen stationärer Joche vorgesehen sein können, welche Stufen eines mehrstufigen Magnetgetriebes bilden.

Zweckmäßigerweise sind die Joche gegebenenfalls an/in einer die Eingangs- und die Ausgangsseite des Magnetgetriebes trennenden Trennwand angeordnet.

Nachfolgend ist die Erfindung anhand von in der Zeichnung dargestellten Ausführungsbeispielen näher erläutert. Es zeigen:
- Fig. 1: eine erfindungsgemäße Strömungserzeugungseinheit in einer schematischen Darstellung,
- Fig. 2: den Elektromotor und das Magnetgetriebe der Strömungserzeugungseinheit gemäß Fig. 1 schematisch im Längsschnitt,
- Fig.3: die Anordnung der Magnetringe der Eingangsseite und der Ausgangsseite des Magnetgetriebes gemäß Figuren 1 und 2 schematisch im Querschnitt,
- Fig. 4: den Elektromotor und ein alternativ ausgebildetes Magnetgetriebe einer erfindungsgemäßen Strömungserzeugungseinheit schematisch im Längsschnitt und
- Fig. 5: die Anordnung der Magnetringe der Eingangsseite und der Ausgangsseite des Magnetgetriebes gemäß Fig. 4 schematisch im Querschnitt.

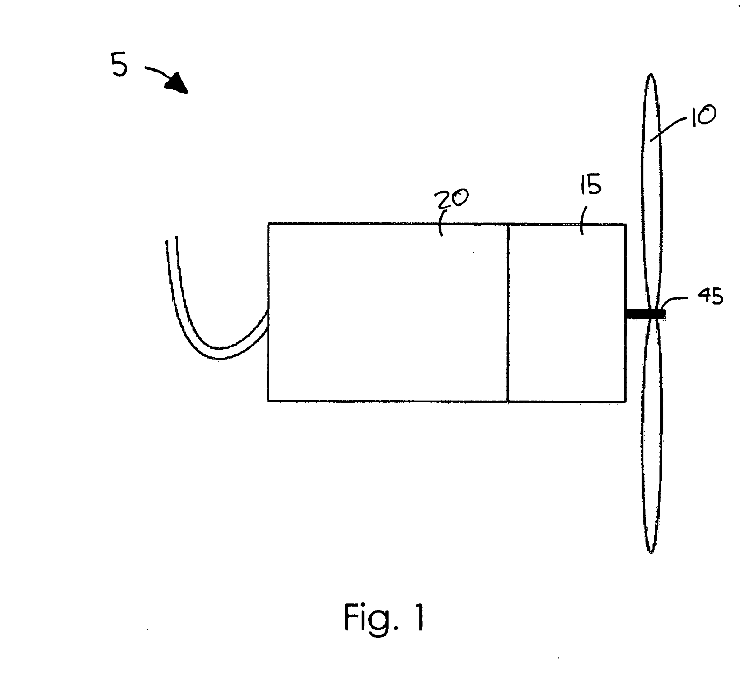

Die in Fig. 1 gezeigte Strömungserzeugungseinheit ist ein zum Tauchbetrieb ausgebildeter Strömungsbeschleuniger 5 (die nachfolgend beschriebene Funktionsweise ist ohne weiteres auch auf Rezirkulationspumpen oder Mixer übertragbar). Der Strömungsbeschleuniger 5 weist zur Strömungsbeschleunigung ein freistehendes Flügelrad 10 auf. Das Flügelrad 10 ist zum Antrieb mit der Ausgangsseite eines Magnetgetriebes 15 des Strömungsbeschleunigers 5 bewegungsgekoppelt. An der dem Flügelrad 10 abgewandten Seite des Magnetgetriebes 15 ist ein Elektromotor 20 des Strömungsbeschleunigers 5 angeordnet und mit der Eingangsseite des Magnetgetriebes 15 bewegungsgekoppelt.

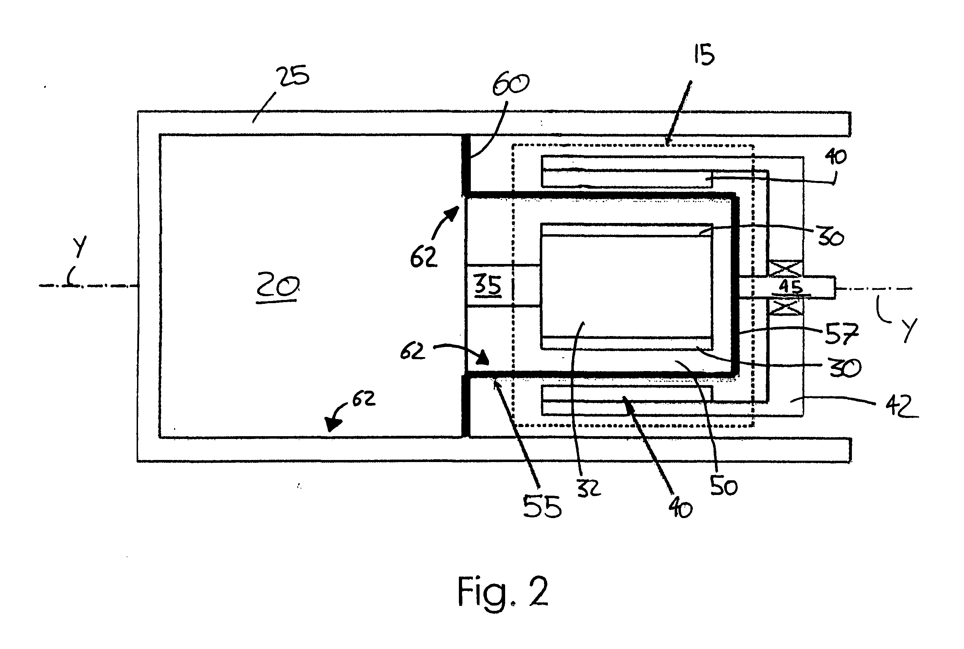

Das Magnetgetriebe 15 und der Elektromotor 20 weisen ein gemeinsames, im Wesentlichen zylindrisches, Gehäuse 25 (Fig. 2) auf. Das Magnetgetriebe 15 des Strömungsbeschleunigers 5 umfasst einen eingangsseitigen Magnetring 30, der über eine (mittels einer Nabe 32 angebundenen) Welle 35 mit dem Elektromotor 20 drehfest bewegungsgekoppelt ist. Das Magnetgetriebe 15 weist ferner einen ausgangsseitigen Magnetring 40 auf, der über eine (mittels eines Rahmens 42 angebundenen) Antriebswelle 45, welche sich parallel zur Welle 35 erstreckt, mit dem Flügelrad 10 drehfest bewegungsgekoppelt ist. Der eingangsseitige 30 und der ausgangsseitige Magnetring 40 bilden dabei zylindermantelförmige Ringe 30, 40, deren Zylinderachsen sich axial, d. h. parallel zur Längsachse der Welle 45, an der das Flügelrad 10 angebunden ist, erstrecken.

Zwischen dem eingangsseitigen Magnetring 30 und dem ausgangsseitigen Magnetring 40 ist dabei ein kreisringförmiger Luftspalt 50 gebildet. Im Bereich dieses Luftspalts 50 ist der eingangsseitige Magnetring 30 von einer topfförmigen, sich im Wesentlichen axial erstreckenden Trennwand 55 flüssigkeitsdicht umhüllt, die an dem dem Flügelrad 10 nahen Axialende des Magnetrings 30 mit einem sich radial erstreckenden Boden 57 abschließt. Die Trennwand 55 und der Boden 57 bestehen aus einem nichtmagnetischen, elektrisch isolierenden Material, hier Kunststoff. Am elektromotorseitigen Ende der am Elektromotor 20 angebundenen Welle 35 kragt die Trennwand 55 mit einem Kragen 60 radial aus. Der Kragen 60 ist mit dem Gehäuse 25 dicht verbunden. Trennwand 55, Boden 57, Kragen 60 und Gehäuse 25 bilden zusammen eine Kapselung 62, die den Elektromotor 20 gemeinsam mit dem eingangsseitigen Magnetring 30 des Magnetgetriebes flüssigkeitsdicht umschließt. Die Kapselung 62 trennt den Elektromotor 20 und den eingangsseitigen Magnetring 30 vom ausgangsseitigen Magnetring 40 und dem außerhalb der Kapselung 62 angeordneten Flügelrad 10.

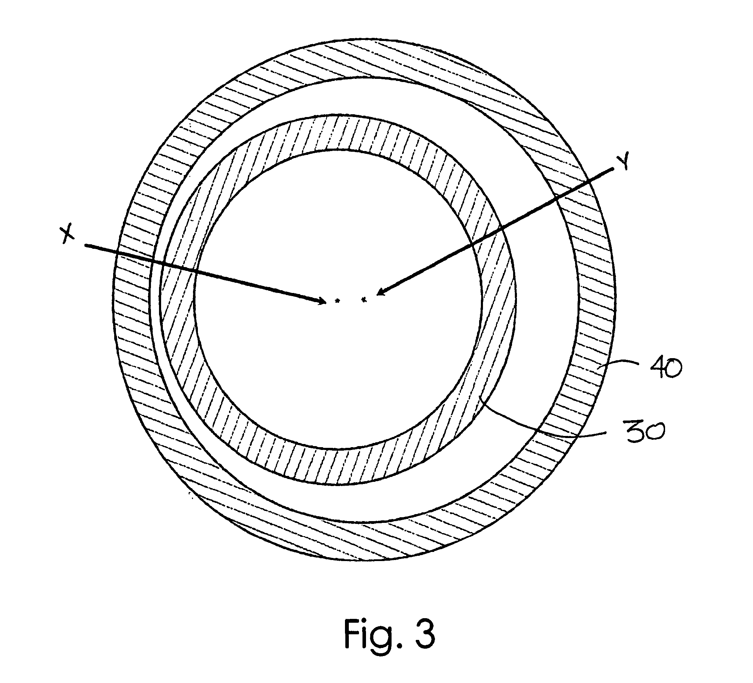

Der eingangsseitige Magnetring 30 und der ausgangsseitige Magnetring 40 sind zueinander exzentrisch um zueinander parallele Drehachsen X (Magnetring 30) (s. Fig. 3) und Y (Magnetring 40) angeordnet. Die Drehachsen sind dabei in einer Ebene zueinander versetzt, sodass in Fig. 2 daher nur eine Drehachse Y zu erkennen ist. Sowohl der eingangsseitige Magnetring 30 als auch der ausgangsseitige Magnetring 40 weisen dabei in umfänglicher Richtung eine Wechselfolge magnetischer Nord-und Südpole auf (in den Zeichnungen nicht im Einzelnen dargestellt). Die magnetischen Pole bzw. Polpaare des eingangsseitigen Magnetrings 30 nehmen dabei jeweils gleich lange umfängliche Abschnitte ein wie die Pole bzw. Polpaare des ausgangsseitigen Magnetrings 40. Der eingangsseitige Magnetring 30 ist daher mit dem ausgangsseitigen Magnetring 40 ähnlich Zahnrädern bewegungsgekoppelt, hier in der Art einer außen verzahnten Eingangsseite mit einer innen verzahnten Ausgangsseite eines Zahnradgetriebes. Infolge des kleineren Durchmessers des eingangsseitigen Magnetrings 30 und der, verglichen mit dem ausgangsseitigen Magnetring 40, geringeren Polanzahl weist das Magnetgetriebe 15 ein Übersetzungsverhältnis größer als 1 auf.

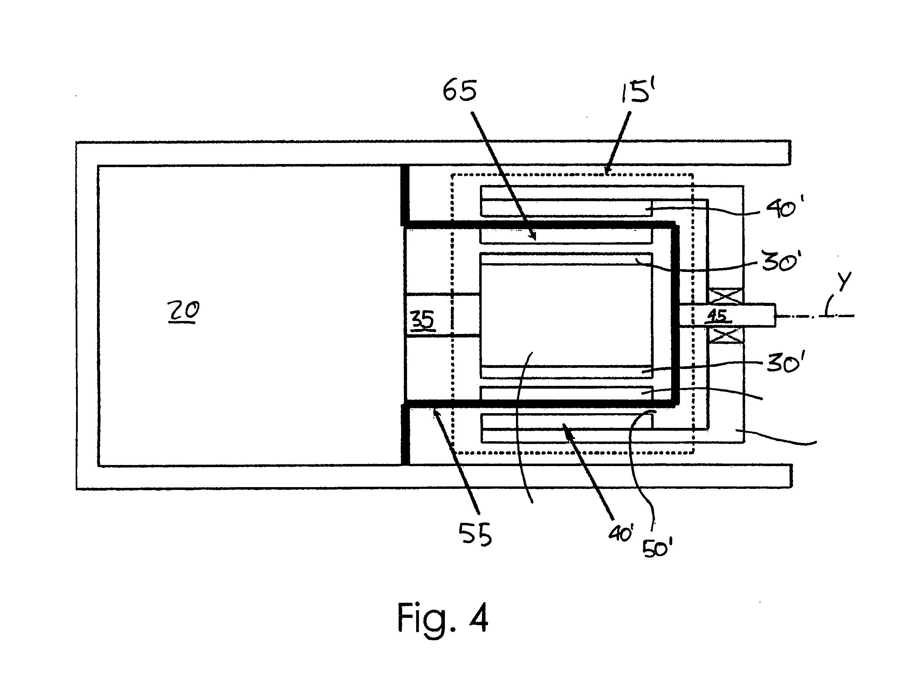

Ein weiteres Ausführungsbeispiel eines erfindungsgemäßen Strömungsbeschleunigers ist in Fig. 4 gezeigt. Der Strömungsbeschleuniger ist im Wesentlichen gleichartig dem Strömungsbeschleuniger 5 in Fig. 1 aufgebaut, sodass auch hinsichtlich dieses Ausführungsbeispiels auf Fig. 1 Bezug genommen wird. Auch der innere Aufbau entspricht weitgehend dem in Fig. 2 dargestellten inneren Aufbau des Strömungsbeschleunigers 5. Abweichend sind allerdings bei dem Magnetgetriebe 15' der eingangsseitige Magnetring 30' und der ausgangsseitige Magnetring 40' zueinander konzentrisch angeordnet.

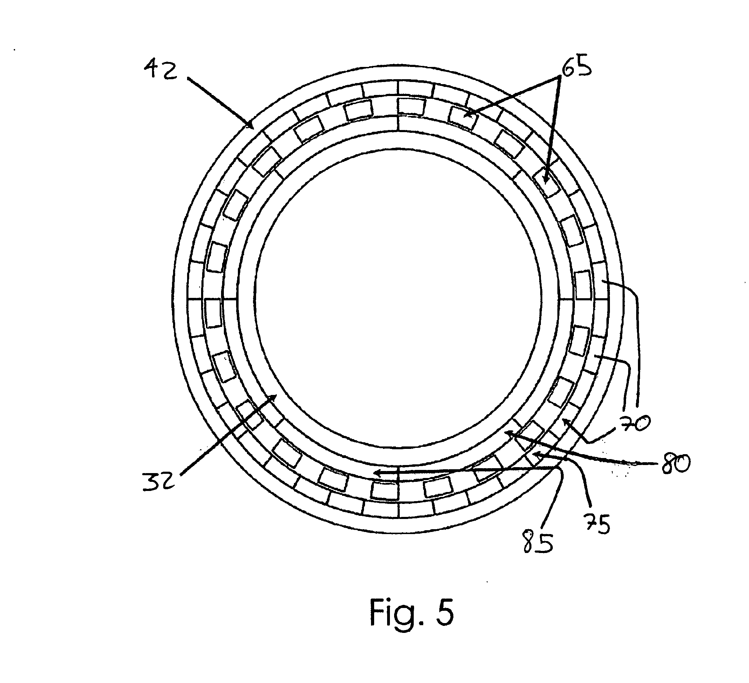

Zur Gewährleistung eines Übersetzungsverhältnisses sind innenumfänglich der Trennwand 55 gleichabständig Joche 65 verteilt. Die Joche 65 sind zwischen dem eingangsseitigen Magnetring 30' und dem ausgangsseitigen Magnetring 40' auf einem konzentrischen Kreisring angeordnet. Die Anzahl der Joche 65 weicht dabei von der Anzahl der Nordpole des ausgangsseitigen Magnetrings 40' ab. In dem dargestellten Ausführungsbeispiel weist, wie in Fig. 5 dargestellt, der ausgangsseitige Magnetring 40' 18 Nordpole 70 (bzw. 18 Südpole 75) auf. Die Anzahl der Joche 65 beträgt in diesem Ausführungsbeispiel 22. Auf diese Weise wirken der ausgangsseitige Magnetring 40' und die Joche 65, zur Erzeugung eines innenliegenden, effektiven magnetischen Feldes zusammen, welches vier Modulationsperioden, d. h. vier Nordpole und vier Südpole, aufweist.

Angepasst an dieses innere magnetische, effektive Feld weist der eingangsseitige Magnetring 30' entlang der umfänglichen Richtung vier Nordpole 80 und vier Südpole 85 auf. Die Summe der Anzahl der Nordpole 80 des eingangsseitigen Magnetrings 30' und der Nordpole 70 des ausgangsseitigen Magnetrings 40' entspricht gerade der Anzahl 22 der zwischenliegenden Joche 65. Das Übersetzungsverhältnis des Magnetgetriebes 15' ergibt sich in diesem Fall als Verhältnis der Anzahlen der Nordpole 70 des ausgangsseitigen Magnetrings 40' und der Anzahl der Nordpole 80 des eingangsseitigen Magnetrings 30' zu 4,5.

In einem weiteren Ausführungsbeispiel (in der Zeichnung nicht dargestellt) sind die oben diskutierten, unterschiedlichen Ausbildungen eines Magnetgetriebes 15, 15' miteinander kombiniert. Beispielsweise kann abweichend von dem zuletzt beschriebenen Ausführungsbeispiel der eingangsseitige Magnetring 30' exzentrisch um eine parallel zur Drehachse des ausgangsseitigen Magnetrings 40' verlaufende, versetzte Drehachse drehbar sein. In diesem Fall koppelt der eingangsseitige Magnetring 30' in der Art eines Zahnradgetriebes mit dem durch den ausgangsseitigen Magnetring 40' und den Jochen 65 erzeugten, effektiven magnetischen Feld. Schematisch kann die relative Anordnung des eingangsseitigen Magnetrings 30' und des ausgangsseitigen Magnetrings 40' der in Fig. 3 dargestellten Anordnung des eingangsseitigen Magnetrings 30 und des ausgangsseitigen Magnetrings 40 entsprechen.

In einem weiteren, nicht gesondert dargestellten Ausführungsbeispiel ist das Magnetgetriebe 15 mehrstufig aufgebaut und umfasst mehr als zwei nebeneinander bzw. umeinander angeordnete Magnetringpaare. In einem weiteren Ausführungsbeispiel ist das Magnetgetriebe 15' mehrstufig aufgebaut und umfasst mehr als zwei konzentrisch zueinander angeordnete Magnetringe, die jeweils über konzentrische Anordnungen stationärer Joche voneinander getrennt sind. Die vorstehend beschriebenen Ausbildungen 15, 15' des Magnetgetriebes sind, soweit sinnvoll, miteinander frei kombinierbar.

### Bezugszeichenliste

- 5 -: Strömungsbeschleuniger
- 10 -: Flügelrad
- 15, 15' -: Magnetgetriebe
- 20 -: Elektromotor
- 25 -: Gehäuse
- 30, 30' -: eingangsseitiger Magnetring
- 32 -: Nabe
- 35 -: Welle
- 40, 40' -: ausgangsseitiger Magnetring
- 42 -: Rahmen
- 45 -: Welle
- 50, 50' -: Luftspalt
- 55 -: Trennwand
- 57 -: Boden
- 60 -: Kragen
- 62 -: Kapselung
- 65 -: Joche
- 70 -: Nordpole
- 75 -: Südpole
- 80 -: Nordpole
- 85 -: Südpole

- X -: Drehachse
- Y -: Drehachse

## Patentansprüche

1. Strömungserzeugungseinheit, die zum Tauchbetrieb in einer Flüssigkeit ausgebildet ist und welche eine Rezirkulationspumpe, ein Mixer oder ein Strömungsbeschleuniger (5, 5') ist, mit einem Flügelrad (10) und einem Elektromotor (20), **dadurch gekennzeichnet, dass** die Strömungserzeugungseinheit ein Magnetgetriebe (15, 15') umfasst, welches eine Eingangsseite und eine Ausgangsseite mit jeweils einer Anordnung (30, 30', 40, 40') magnetischer Pole (70, 75, 80, 85) aufweist, wobei die Anordnungen (30, 30', 40, 40') magnetischer Pole (70, 75, 80, 85) miteinander durch Magnetfelder bewegungsgekoppelt sind, zwischen Ein- und Ausgangsseite des Magnetgetriebes (15, 15') ein Übersetzungsverhältnis besteht, die Ausgangsseite des Magnetgetriebes (15, 15') zum Antrieb des Flügelrades (10) mit diesem bewegungsgekoppelt ist, der Elektromotor (20) zum Antrieb des Magnetgetriebes (15, 15') mit dessen Eingangsseite bewegungsgekoppelt ist und wobei eine Kapselung (62) vorhanden ist, die den Elektromotor (20) und die Anordnung (30, 30') magnetischer Pole (80, 85) der Eingangsseite des Magnetgetriebes (15, 15') gemeinsam flüssigkeitsdicht kapselt und von der Ausgangsseite des Magnetgetriebes (15, 15') trennt.

2. Strömungserzeugungseinheit nach Anspruch 1, **dadurch gekennzeichnet, dass** zumindest ein zwischen den Anordnungen (30, 30', 40, 40') magnetischer Pole (70, 75, 80, 85) der Ein- und der Ausgangsseite des Magnetgetriebes (15, 15') angeordneter Teil der Kapselung (62) eine nichtmagnetische Trennwand (55) bildet.

3. Strömungserzeugungseinheit nach einem der vorhergehenden Ansprüche, **dadurch gekennzeichnet, dass** zumindest ein zwischen den Anordnungen (30, 30', 40, 40') magnetischer Pole (70, 75, 80, 85) der Ein- und der Ausgangsseite des Magnetgetriebes (15, 15') angeordneter Teil der Kapselung (62) einen elektrischen Isolator bildet.

4. Strömungserzeugungseinheit nach einem der vorhergehenden Ansprüche, **dadurch gekennzeichnet, dass** das Übersetzungsverhältnis des Magnetgetriebes (15, 15') größer als eins ist.

5. Strömungserzeugungseinheit nach einem der vorhergehenden Ansprüche, **dadurch gekennzeichnet, dass** die Anordnungen (30, 30', 40, 40') magnetischer Pole (70, 75, 80, 85) von Ein- und Ausgangsseite des Magnetgetriebes (15, 15') jeweils als Magnetring (30, 30', 40, 40') mit mehrpoliger Magnetisierung ausgebildet sind.

6. Strömungserzeugungseinheit nach Anspruch 5, **dadurch gekennzeichnet, dass** der Magnetring (30, 30') der Eingangsseite und der Magnetring (40, 40') der Ausgangsseite des Magnetgetriebes (15, 15') um zueinander parallel verlaufende Drehachsen (X, Y) drehbar angeordnet sind.

7. Strömungserzeugungseinheit nach Anspruch 5 oder 6, **dadurch gekennzeichnet, dass** der Magnetring (30, 30') der Eingangsseite und der Magnetring (40, 40') der Ausgangsseite des Magnetgetriebes um zueinander versetzte Drehachsen (X, Y) drehbar angeordnet sind.

8. Strömungserzeugungseinheit nach einem der Ansprüche 5 bis 7, **dadurch gekennzeichnet, dass** der Magnetring der Eingangsseite des Magnetgetriebes eine geringere Anzahl von Polen (80, 85) als der Magnetring der Ausgangsseite aufweist.

9. Strömungserzeugungseinheit nach einem der Ansprüche 5 bis 8, **dadurch gekennzeichnet, dass** der Magnetring (30, 30') der Eingangsseite des Magnetgetriebes (15, 15') einen geringeren Radius als der Magnetring (40, 40') der Ausgangsseite aufweist.

10. Strömungserzeugungseinheit nach Anspruch 9, **dadurch gekennzeichnet, dass** der Magnetring (30, 30') der Eingangsseite des Magnetgetriebes umfänglich vom Magnetring der Ausgangsseite (40, 40') umgeben ist.

11. Strömungserzeugungseinheit nach einem der vorhergehenden Ansprüche, **dadurch gekennzeichnet, dass** das Magnetgetriebe (15') zwischen den Anordnungen (30', 40') magnetischer Pole (70, 75, 80, 85) der Ein- und der Ausgangsseite des Magnetgetriebes (15') eine Anordnung stationärer Joche (65) aufweist, welche zur Bildung des Übersetzungsverhältnisses ausgebildet ist.

12. Strömungserzeugungseinheit nach den Ansprüchen 5 und 11, **dadurch gekennzeichnet, dass** die Magnetringe (30', 40') der Einund der Ausgangsseite konzentrisch zueinander angeordnet sind.

13. Strömungserzeugungseinheit nach Anspruch 11 oder 12, **dadurch gekennzeichnet, dass** die Anzahl der Joche (65) von der Anzahl der Nordpole (70) des Magnetrings der Ausgangsseite zumindest um die Anzahl der Nordpole (80) des Magnetrings (30, 30') der Eingangsseite abweicht.

## Claims

1. A flow production unit, which is designed for submerged operation in a fluid and which is a recirculation pump, a mixer or a flow accelerator (5, 5'), with an impeller (10) and an electric motor (20), **characterised in that** the flow production unit comprises a magnet gear (15, 15') which comprises an input side and an output side, in each case with an arrangement (30, 30', 40, 40') of magnetic poles (70, 75, 80, 85), wherein the arrangements (30, 30', 40, 40') of magnetic poles (70, 75, 80, 85) are coupled in movement to one another by way of magnetic fields, a transmission ratio exists between an input side and output side of the magnet gear (15, 15'), the output side of the magnet gear (15, 15') is coupled in movement to the impeller (10) for the drive of this, the electric motor (20) for the drive of the magnet gear (15, 15') is coupled in movement to the input side of this gear, and wherein an encapsulation (62) is present, which commonly encapsulates the electric motor (20) and the arrangement (30, 30') of magnetic poles (80, 85) of the input side of the magnet gear (15, 15') in a fluid-tight manner, and separates them from the output side of the magnet gear (15, 15').

2. A flow production unit according to claim 1, **characterised in that** at least one part of the encapsulation (62), said part being arranged between the arrangements (30, 30', 40, 40') of magnetic poles (70, 75, 80, 85) of the input side and the output side of the magnet gear (15, 15'), forms a non-magnetic separating wall (55).

3. A flow production unit according to one of the preceding claims, **characterised in that** at least a part of the encapsulation (62), said part being arranged between the arrangements (30, 30', 40, 40') of magnetic poles (70, 75, 80, 85) of the input side and output side of the magnet gear (15, 15'), forms an electrical insulator.

4. A flow production unit according to one of the preceding claims, **characterised in that** the transmission ratio of the magnet gear (15, 15') is larger than one.

5. A flow production unit according to one of the preceding claims, **characterised in that** the arrangements (30, 30', 40, 40') of magnetic poles (70, 75, 80, 85) of the input side and output side of the magnet gear (15, 15') are in each case designed as a magnet ring (30, 30', 40, 40') with a multi-pole magnetisation.

6. A flow production unit according to claim 5, **characterised in that** the magnet ring (30, 30') of the input side and the magnet ring (40, 40') of the output side of the magnet gear (15, 15') are rotatably arranged about rotation axes (X, Y) running parallel to one another.

7. A flow production unit according to claim 5 or 6, **characterised in that** the magnet ring (30, 30') of the input side, and the magnet ring (40, 40') of the output side, of the magnet gear, are rotatably arranged about rotation axes (X, Y) which are offset to one another.

8. A flow production unit according to one of the claims 5 to 7, **characterised in that** the magnet ring of the input side of the magnet gear has a lower number of poles (80, 85) than the magnet ring of the output side.

9. A flow production unit according to one of the claims 5 to 8, **characterised in that** the magnet ring (30, 30') of the input side of the magnet gear (15, 15') has a smaller radius than the magnet ring (40, 40') of the output side.

10. A flow production unit according to claim 9, **characterised in that** the magnet ring of the input side of the magnet gear is peripherally surrounded by the magnet ring of the output side (40, 40')

11. A flow production unit according to one of the preceding claims, **characterised in that** the magnet gear (15') between the arrangements (30', 40') of magnetic poles (70, 75, 80, 85) of the input side and output side of the magnet gear (15') has an arrangement of stationary yokes (65), which is designed for forming the transmission ratio.

12. A flow production unit according to one of the claims 5 and 11, **characterised in that** the magnet rings (30', 40') of the input side and output side are arranged concentrically to one another.

13. A flow production unit according to claim 11 or 12, **characterised in that** the number of yokes (65) differs from the number of north poles (70) of the magnet ring of the output side at least by the number of the north poles (80) of the magnet ring (30, 30') of the input side.

## Revendications

1. Unité génératrice de courant, configurée pour fonctionner en immersion dans un liquide, et qui est une pompe de recirculation, un mélangeur ou un accélérateur d'écoulement (5, 5'), comportant une hélice (10) et un moteur électrique (20), **caractérisée en ce que** l'unité génératrice de courant comprend un engrenage magnétique (15, 15'), qui comprend un côté entrée et un côté sortie, chacun comportant un arrangement (30, 30', 40, 40') de pôles magnétiques (70, 75, 80, 85), les arrangements (30, 30', 40, 40') de pôles magnétiques (70, 75, 80, 85) étant couplés en mouvement les uns aux autres par des champs magnétiques, où il existe un rapport de démultiplication entre le côté entrée et le côté sortie de l'engrenage magnétique (15, 15'), le côté sortie de l'engrenage magnétique (15, 15') étant, pour entraîner l'hélice (10), couplé en mouvement à cette dernière, le moteur électrique (20) étant, pour entraîner l'engrenage magnétique (15, 15'), couplé en mouvement à son côté entrée, et un blindage (62) étant présent, qui entoure d'une manière étanche aux liquides l'ensemble constitué du moteur électrique (20) et de l'arrangement (30, 30') de pôles magnétiques (80, 85) du côté entrée de l'engrenage magnétique (15, 15'), et le sépare du côté sortie de l'engrenage magnétique (15, 15').

2. Unité génératrice de courant selon la revendication 1, **caractérisée en ce qu'**au moins une partie du blindage (62), disposée entre les arrangements (30, 30', 40, 40') de pôles magnétiques (70, 75, 80, 85) du côté entrée et du côté sortie de l'engrenage magnétique (15, 15'), forme une paroi de séparation (55) non magnétique.

3. Unité génératrice de courant selon l'une des revendications précédentes, **caractérisée en ce qu'**au moins une partie du blindage (62) disposée entre les arrangements (30, 30', 40, 40') de pôles magnétiques (70, 75, 80, 85) du côté entrée et du côté sortie de l'engrenage magnétique (15, 15'), forme un isolateur électrique.

4. Unité génératrice de courant selon l'une des revendications précédentes, **caractérisée en ce que** le rapport de démultiplication de l'engrenage magnétique (15, 15') est supérieur à un.

5. Unité génératrice de courant selon l'une des revendications précédentes, **caractérisée en ce que** chacun des arrangements magnétiques (30, 30', 40, 40') de pôles magnétiques (70, 75, 80, 85) du côté entrée et du côté sortie de l'engrenage magnétique (15, 15') est configuré comme une bague magnétique (30, 30', 40, 40') à aimantation multipolaire.

6. Unité génératrice de courant selon la revendication 5, **caractérisée en ce que** la bague magnétique (30, 30') du côté entrée et la bague magnétique (40, 40') du côté sortie de l'engrenage magnétique (15, 15') sont disposées de façon à pouvoir tourner autour d'axes de rotation (X, Y) courant parallèlement l'un à l'autre.

7. Unité génératrice de courant selon la revendication 5 ou 6, **caractérisée en ce que** la bague magnétique (30, 30') du côté entrée et la bague magnétique (40, 40') du côté sortie de l'engrenage magnétique sont disposées de façon à pouvoir tourner autour d'axes de rotation (X, Y) décalés l'un par rapport à l'autre.

8. Unité génératrice de courant selon l'une des revendications 5 à 7, **caractérisée en ce que** la bague magnétique du côté entrée de l'engrenage magnétique comprend un nombre de pôles (80, 85) plus restreint que la bague magnétique du côté sortie.

9. Unité génératrice de courant selon l'une des revendications 5 à 8, **caractérisée en ce que** la bague magnétique (30, 30') du côté entrée de l'engrenage magnétique (15, 15') présente un rayon plus petit que la bague magnétique (40, 40') du côté sortie.

10. Unité génératrice de courant selon la revendication 9, **caractérisée en ce que** la bague magnétique (30, 30') du côté entrée de l'engrenage magnétique est circonférentiellement entourée par la bague magnétique du côté sortie (40, 40').

11. Unité génératrice de courant selon l'une des revendications précédentes, **caractérisée en ce que** l'engrenage magnétique (15') comprend, entre les arrangements (30', 40') de pôles magnétiques (70, 75, 80, 85) du côté entrée et du côté sortie de l'engrenage magnétique (15'), un arrangement d'étriers stationnaires (65), qui est conçu pour former le rapport de démultiplication.

12. Unité génératrice de courant selon les revendications 5 et 11, **caractérisée en ce que** les bagues magnétiques (30', 40') du côté entrée et du côté sortie sont disposées de manière concentrique l'une par rapport à l'autre.

13. Unité génératrice de courant selon la revendication 11 ou 12, **caractérisée en ce que** le nombre des étriers (65) diffère du nombre de pôles nord (70) de la bague magnétique du côté sortie, d'au moins le nombre des pôles nord (80) de la bague magnétique (30, 30') du côté entrée.
